# EUROPÄISCHE PATENTSCHRIFT

(11) **EP 1 889 534 B1**
(45) Veröffentlichungstag und Bekanntmachung des Hinweises auf die Patenterteilung: **25.01.2012**
(21) Anmeldenummer: 07112996.9
(22) Anmeldetag: 24.07.2007
(51) Int. Cl.: A01F 15/08

(54) **Rundballenpresse**
Round baling press
Presse à ballots ronds

(30) Priorität: 16.08.2006 DE 102006038299
(43) Veröffentlichungstag der Anmeldung: 20.02.2008
(73) Patentinhaber: Deere & Company, Moline, IL 61265-8098 (US)
(72) Erfinder: Viaud, Jean, 70100, Gray (FR)
(74) Vertreter: Magin, Ludwig Bernhard

(56) Entgegenhaltungen:
- EP-A- 1 438 889
- EP-A- 1 832 157

## Beschreibung

Die Erfindung betrifft eine Rundballenpresse mit einem Aufbau, einer Ballenkammer und einer an diese anschließenden Entladevorrichtung mit wenigstens einem eine Rollbewegung des Rundballens zulassenden Tragelement zwischen der Ballenkammer und einer Bodenfläche.

Beim Entladen eines Rundballens aus der Ballenkammer einer Rundballenpresse stellt sich jeweils das Problem der Kontrolle über dessen Bewegung. Rollt der Rundballen nicht weit genug von der Rundballenpresse weg, kann die Auslaßklappe nicht abgesenkt und die Ballenkammer nicht geschlossen werden. Hat der Rundballen zu viel Schwung, rollt er unkontrolliert weiter und z.B. einen Hang abwärts. Wird er gar zu sehr beim Austritt aus der Ballenkammer gebremst, bleibt er auf einer Achse oder sonstigen Querstreben sitzen und rollt nicht die Rampe hinunter, bzw. seine Drehrichtung kehrt sich um, und auf ihm aufgewickeltes Garn fällt von dem herunter rollenden Rundballen herab.

Die US 4683815 A offenbart eine Rundballenpresse mit einer Rampe, auf deren Oberseite angetriebene Transportketten wirken und die den Rundballen sicher von der Ballenkammer weg befördern.

Von Rundballenpressen der Fa. WELGER ist es zudem bekannt, eine vertikal schwenkbare Rampe am Auslaß der Ballenkammer und hinter einer Achse vorzusehen, die mit quer angeordneten Rollen versehen ist und somit den "Spin" des austretenden Rundballens beibehalten soll, so dass das Garn nicht herabfällt. Dieser Effekt tritt aber nur ein, wenn der Spin beim Austreten noch vorhanden ist.

Das der Erfindung zugrunde liegende Problem wird darin gesehen, dass es keine Lösung gibt, die das Herabfallen des Garns aufgrund des falsch herum rollenden Rundballens verhindert und für einen sicheren Austritt des Rundballens sorgt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kommt der sich beim Austreten aus der Ballenkammer noch drehende Rundballen nicht mit ruhenden Teilen des Aufbaus in Bewegung, wird somit nicht abgebremst und behält seinen Spin bei, der einem Abrollen des Garns entgegengerichtet ist. Bei dem betreffenden Teil des Aufbaus kann es sich um die Achse für die Laufräder, eine Strebe, Leitbleche für das Netz, Hydraulikkomponenten und dergleichen handeln, die auf den Rundballen bei einer Berührung bremsend einwirken könnten. Allerdings könnten auch andere stationäre Teile, z.B. einer Bindevorrichtung, der Ballenkammer, der Entladevorrichtung etc. abgedeckt werden, die nicht zum Aufbau gehören. Die Abdeckung kann ebenfalls wie in den abhängigen Patentansprüchen definiert unterschiedlichst ausgebildet sein, wobei wesentlich ist, dass die Bewegung der Abdeckung die Bewegung des Rundballens erhält. Die Bewegung könnte sowohl von der Bewegung des Rundballens abgeleitet als auch aktiv, z.B. durch einen Motor oder eine antriebsmäßige Verbindung mit angetriebenen Teilen der Rundballenpresse, erzeugt werden. Die Bewegung der Abdeckung könnte zudem gesteuert werden, um die optimale Drehgeschwindigkeit und eventuell die Drehrichtung des Rundballens zu erzeugen.

Da die Seitenteile der Rundballenpresse stets durch relativ große, quer verlaufende Streben verbunden sind, wozu der Funktion nach auch die Achse für die Laufräder zählt, besteht dort stets die Gefahr, dass sich der Rundballen anlegt und abgebremst wird. Zwar könnten auf oder um die Querstrebe herum Rollen - meist mit einem kleinen Durchmesser - angebracht werden; einfacher und effektiver erscheint jedoch die Verwendung eines Rohrs mit einem großen Durchmesser, das die Querstrebe bzw. die Achse in sich aufnimmt. Dieses Rohr könnte aus Metall wie auch aus Kunststoff bestehen und wäre vorzugsweise glatt.

Das Rohr ist einfach zu montieren, wenn es in seiner Längsrichtung wenigstens einmal getrennt ist und wieder fest geschlossen werden kann. Der Verschluss kann durch Manschetten, Schrauben oder dergleichen erfolgen. Andererseits könnte das Rohr aus mehreren Bogensegmenten bestehen, die auf ringförmige Träger aufgeschraubt oder sonstwie befestigt werden.

Die Lagerung des Rohrs auf Gleit- oder Rollenlagern stellt sicher, dass vom Rohr selbst keine Bremswirkung ausgeht. Je nach der Länge des Rohrs können mehrere Lager vorgesehen werden oder es können auch ein oder mehrere lange Rollen oder Wellen zwischen der Querstrebe und der Innenseite des Rohrs vorgesehen werden, die das Rohr reibungsarm lagern.

Der Spin des Rundballens, d.h. seine ihm ursprünglich innewohnende Drehbewegung, wird auch auf dem Weg zur Ablage auf dem Boden beibehalten, wenn er z.B. auf Rollen weiterrollen kann. Rollen können sehr stabil ausgebildet und reibfrei gelagert werden, sind wartungsarm und kostengünstig.

In Einsatzverhältnissen, in denen kurzes Gut, z.B. bröckelndes Stroh, zu erwarten ist, das Abstände zwischen benachbarten Rollen verstopfen könnte, ist es sinnvoll, eine im Wesentlichen geschlossene Transportfläche als Tragelement zu verwenden, z.B. einen endlosen Riemen, bzw. einen Riemen, dessen Enden miteinander verbunden sind. Ein solcher Riemen kann so breit wie der Rundballen ausgebildet sein, oder auch schmaler, so lange sichergestellt ist, dass der Rundballen sich weiter drehen kann und sich nicht merklich an ruhende Teile anlehnen kann. Der Riemen kann ganzflächig geschlossen oder auch perforiert, glatt oder profiliert sein, und es kann eine Spannvorrichtung vorgesehen werden, die die Trume stets möglichst gerade hält. Je nach der Länge des Riemens können auch zwischendurch Stützrollen verwendet werden. Anstatt eines Riemens kann auch ein anderes Zugmittel, z.B. ein Stabkettenförderer, verwendet werden.

Das Tragelement kann auch wie in der US 4683815 gezeigt ausgebildet werden, wobei die dort gezeigte Transportkette auch von einem Transportband oder Rollkörpern ersetzt werden kann -wesentlich ist lediglich, dass eine im Grund starre Rampe vorgesehen ist, die die Tragelemente trägt. Als Rollkörper könnten Hartkunststoff- wie auch Metallrollen verwendet werden. Die derart vorgesehenen Tragelemente können sowohl angetrieben als auch nicht angetrieben ausgebildet werden.

Einerseits könnte die Entladevorrichtung mit dem oder den Tragelementen als eine eigenständige und komplett ausgebildete Einheit ausgebildet werden, die lediglich an den Aufbau der Rundballenpresse angebracht wird; andererseits könnte das Tragelement der Entladevorrichtung auch um eine Rolle geschlungen werden, die sich an dem Aufbau oder der Ballenkammer befindet. Auf diese Weise wird ein Spalt zwischen der Abdeckung und den Tragelementen vermieden, in dem sich Gut festsetzen könnte. Des Weiteren wird dadurch erreicht, dass das Tragelement beim Auswerfen des Rundballens angetrieben, d.h. bewegt wird, was sich wiederum auf den Rundballen überträgt. Ein solcher Antrieb ist zwar aus der US 3974632 bekannt, dort wird aber kein Rundballen sondern ein Ernteguthaufen aus einer Kammer translatorisch ausgetragen.

Um Schäden an der Entladevorrichtung durch Kontakt mit dem Boden zu vermeiden, ist ein Anschlag vorgesehen, so dass das freie Ende ihres Rahmens stets einen Abstand zum Boden einhält.

Die Verwendung eines insbesondere federnden Distanzhalters am Abgabeende des Rahmens ermöglicht es, den Rundballen an einem Zurückrollen in Richtung Ballenkammer zu hindern. Die Federung macht es möglicht, den Rundballen allmählich von den vom Boden beabstandeten Enden des Rahmens auf den Boden rollen, anstatt fallen zu lassen. Sobald der Rundballen abgesetzt ist, schnellen die oder der Distanzhalter nach oben und legen/legt sich an den Umfang des Rundballens an.

In der Zeichnung sind nachfolgend näher beschriebene Ausführungsbeispiele einer Endladevorrichtung und einer Abdeckung an einer Rundballenpresse dargestellt. Es zeigt:
- Fig. 1: eine Rundballenpresse in schematischer Darstellung und Seitenansicht mit einer Entladevorrichtung und einer Abdeckung,
- Fig. 2: die Entladevorrichtung und die Abdeckung nach Figur 1 in perspektivischer Darstellung,
- Fig. 3: die Entladevorrichtung und die Abdeckung nach Figur 2 nach einem ersten Ausführungsbeispiel und in perspektivischer Darstellung,
- Fig. 4: die Entladevorrichtung und die Abdeckung nach Figur 1 nach einem zweiten Ausführungsbeispiel und in perspektivischer Darstellung,
- Fig. 5: die Entladevorrichtung und die Abdeckung nach Figur 1 nach einem dritten Ausführungsbeispiel und in perspektivischer Darstellung, und
- Fig. 6: die Entladevorrichtung und die Abdeckung nach Figur 1 nach einem vierten Ausführungsbeispiel und in perspektivischer Darstellung.

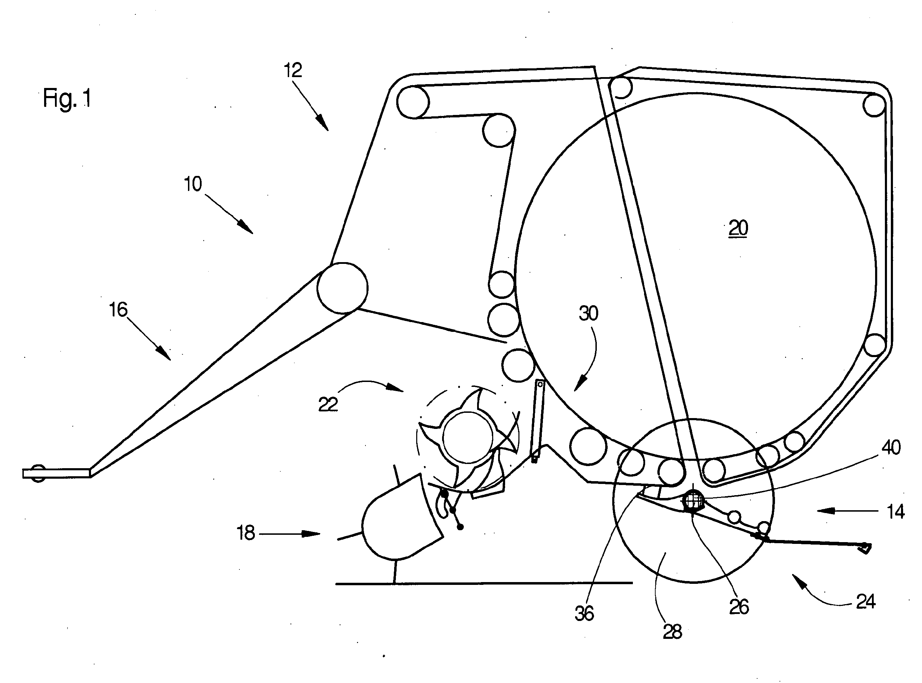

Eine in Figur 1 gezeigte Rundballenpresse 10 ist von üblicher Bauart, d.h. sie weist einen Aufbau 12, ein Fahrgestell 14, eine Deichsel 16, einen Gutaufnehmer 18, eine Ballenkammer 20 und eine Fördervorrichtung 22 auf. Zudem ist eine Entladevorrichtung 24 und eine Abdeckung 40 vorgesehen, die sich jedoch vom Stand der Technik unterscheiden, bzw. dort unbekannt sind.

Die Rundballenpresse 10 ist als eine gezogene Rundballenpresse 10 mit einer größenveränderlichen Ballenkammer 20 dargestellt; es könnte sich genauso um eine selbstfahrende Rundballenpresse 10 und/oder um eine mit einer in der Größe konstanten Ballenkammer 20 handeln, wobei die Art nicht näher bezeichneter Presselemente ohne Belang ist.

Der Aufbau 12 stützt sich auf dem Fahrgestell 14 ab und trägt den Gutaufnehmer 18, die Fördervorrichtung 22 und die Entladevorrichtung 24 und bildet die Ballenkammer 20 zwischen nicht näher bezeichneten ein- oder mehrteiligen Seitenwänden.

Das Fahrgestell 14 enthält eine starr oder federnd angebrachte Querstrebe 26, die zugleich als Achse für Räder 28 dient.

Die Deichsel 16 ist starr oder vertikal schwenkbar an den Aufbau 12 angeschlossen und dient der Verbindung mit einem nicht gezeigten Zugfahrzeug.

Der Gutaufnehmer 18 wird auch als Pick-up bezeichnet und ist höhenbeweglich an den Aufbau 12 angeschlossen, wie dies ebenfalls bekannt ist.

Die Ballenkammer 20 weist an einem vorderen unteren Bereich einen Einlaß 30 für das Fördergut auf, der sich direkt an die Fördervorrichtung 22 anschließt.

Die Fördervorrichtung 22 kann mit dem Gutaufnehmer 18 oder dem Aufbau 12 starr oder beweglich verbunden sein und enthält unter anderem in nicht näher bezeichneter Weise einen Förderrotor, eine Förderkanalwand, Messer und dergleichen. Die Fördervorrichtung 22 hat die Aufgabe, von dem Gutaufnehmer 18 herangeführtes Gut anzunehmen und es geschnitten oder ungeschnitten in die Ballenkammer 20 zu befördern.

Die Entladevorrichtung 24 umfaßt einen Rahmen 32, Tragelemente 34, einen Anschlag 36 und einen oder mehrere Distanzhalter 38. Ferner ist eine Abdeckung 40 vorgesehen, die je nach dem Ausführungsbeispiel der Entladevorrichtung 24 benachbart oder Teil von dieser ist.

Die Entladevorrichtung 24 hat die Aufgabe, einen aus der Ballenkammer 20 entlassenen Rundballen allmählich auf den Boden rollen zu lassen. Hierzu ist sie je nach der Größe der Räder 28 vertikal verschwenkbar oder starr an den Aufbau 12 angeschlossen. In dem gezeigten Ausführungsbeispiel wird von einer schwenkbaren Entladevorrichtung 24 ausgegangen, die während des Pressbetriebs der Rundballenpresse 10 eine obere und während deren Entladebetriebs eine untere Stellung einnimmt, wie dies aber an sich bekannt ist. Im Falle einer vertikal schwenkbaren Entladevorrichtung 24 sind geeignete nicht gezeigte Vorrichtungen, z.B. Federn, Gestänge, Stellflächen an der Auslaßklappe der Rundballenpresse oder dergleichen vorgesehen, um die Entladevorrichtung 24 zurück in die obere Stellung zu bringen. Im Falle einer vertikal starren Entladevorrichtung 34 bedarf es des Anschlags 36 nicht.

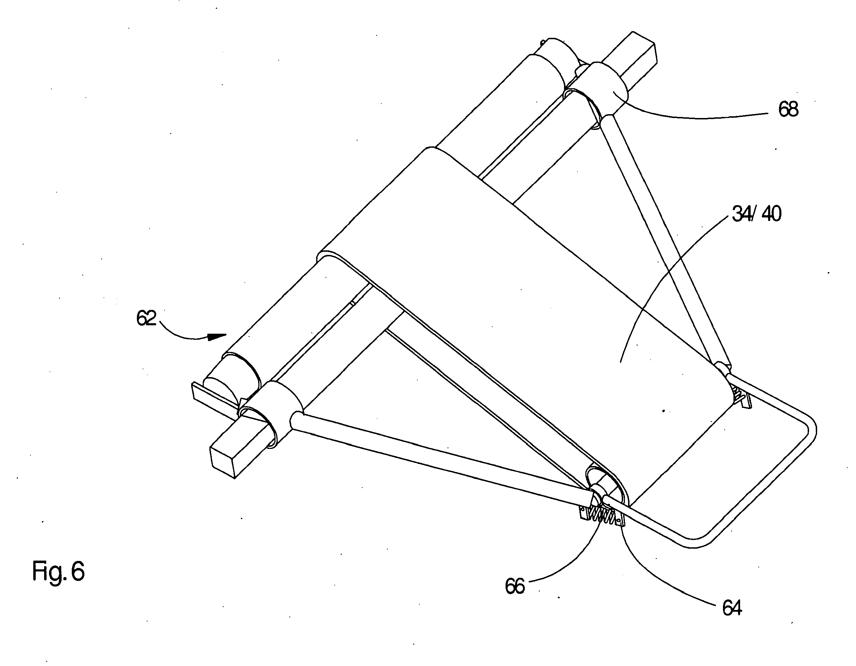

Der Rahmen 32 enthält seitlich jeweils eine Wange 42, die in Querrichtung um den größten Teil der Breite der Ballenkammer 20 voneinander beabstandet sind und untereinander mittels Streben 44 versteift sind. Die Wangen 42 sind mittels Lager 68 auf der Querstrebe 26 vertikal schwenkbar gelagert, wobei sich die Lager 68 bei ungefähr einem Drittel der Länge der Wangen 42 gemessen von deren der Deichsel 16 zugelegenen Vorderkante befinden. Diese Lager 68 können beliebig, z.B. als Hülsen, wie es in Figur 6 gezeigt ist, ausgebildet sein.

Die Tragelemente 34 sind bei dem vorliegenden Ausführungsbeispiel als Rollen ausgebildet, die endseitig in den Wangen 42 drehbar gelagert sind. Die Tragelemente 34 erstrecken sich hauptsächlich parallel zu der Axialen des zu tragenden Rundballens und weisen zueinander einen Abstand auf, der so gering ist, dass sich kein Rundballen darin festsetzen kann. Neben den oder anstatt der Streben 44 können auch die Achsen der Tragelemente 44 zur Versteifung des Rahmens 32 verwendet werden.

Der Anschlag 36 ist in diesem Fall an dem Aufbau 12 vorgesehen und kann sowohl verstellbar als auch starr angebracht werden; in dem vorliegenden Ausführungsbeispiel wird er von einer quer verlaufenden Strebe gebildet. Die Anbringung ist so gewählt, dass der Distanzhalter 38 in der abgesenkten aber unbelasteten Stellung der Endladevorrichtung 24 den Boden nicht berührt.

Der oder die Distanzhalter 38 sind als Blattfedern ausgebildet und weisen nahezu die Länge der Wangen 42 auf. In dem gezeigten Ausführungsbeispiel ist an jede Wange 42 ein Distanzhalter 38 angeschraubt, und zwar dort, wo auch die rückwärtige Strebe 44 befestigt ist. Da die Aufgabe eines Distanzhalters 38 hauptsächlich darin besteht, den Rundballen am Zurückrollen zu hindern, reicht grundsätzlich ein einziger Distanzhalter 38 aus, der z.B. in der Mitte der Strebe 44 angebracht werden könnte. An dem freien Ende des Distanzhalters 38 ist ein Fuß 46 vorgesehen, der selbst dann noch für einen geringen Abstand des Distanzhalters 38 zum Boden sorgt, wenn ein Rundballen auf ihm ruht. Desgleichen wird ein auf dem Rundballen aufliegendes Netz nicht von einer scharfen Kante des Distanzhalterendes beschädigt, da der Fuß 46 eine größere Anlagefläche bietet. Der Fuß 46 ist im Wesentlichen als ein liegendes "U" ausgebildet, dessen einer Schenkel an die Unterseite des Distanzhalters 38 angeschraubt ist. Wie ein Blick insbesondere auf Figur 1 zeigt, stellt ein Distanzhalter 38 keine geradlinige Verlängerung der Wange 42 dar, sondern verläuft zu diesem leicht nach oben abgewinkelt. Zwar weist der Distanzhalter 38 viele Vorteile auf; für die Erhaltung des Spin in dem Rundballen ist er jedoch nicht erforderlich.

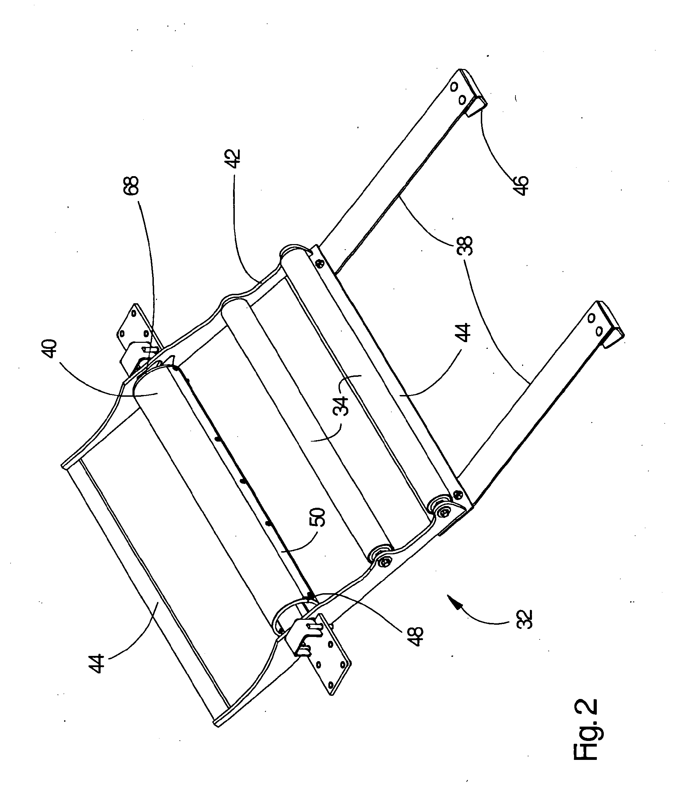

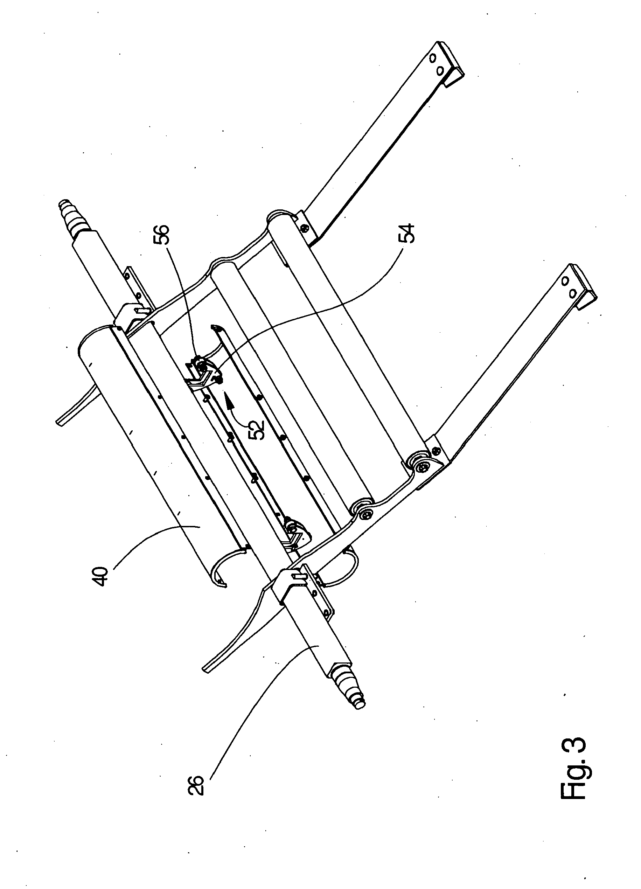

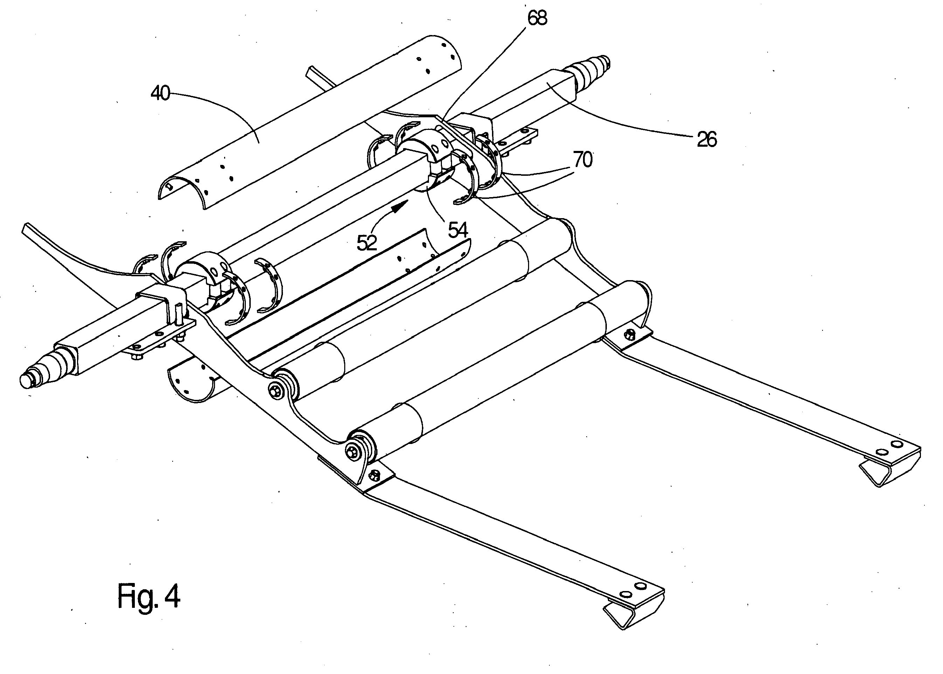

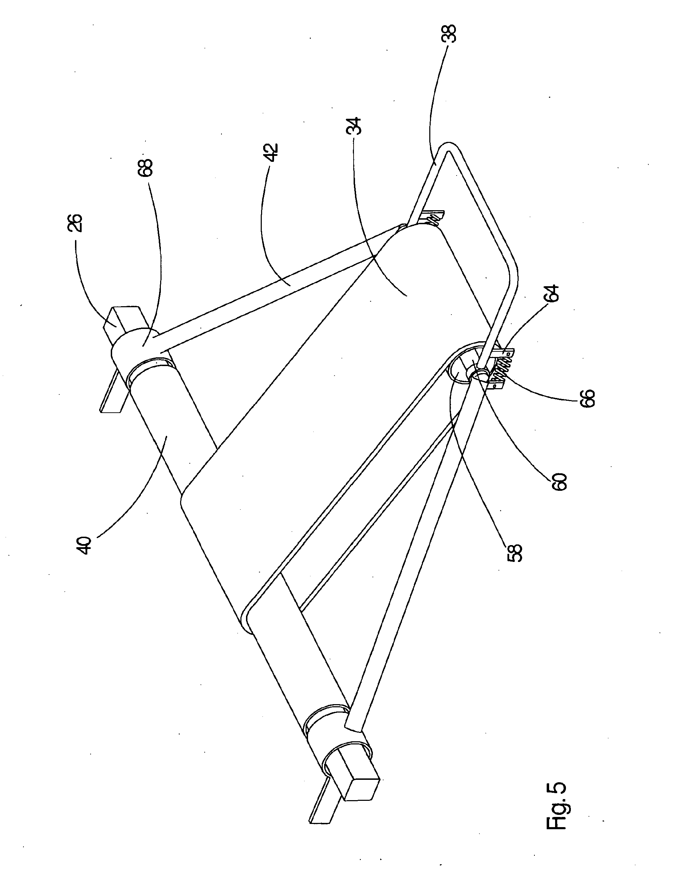

Die Abdeckung 40 ist in dem Ausführungsbeispiel nach den Figuren 2, 3 und 5 als ein Rohr ausgebildet, das die Querstrebe 26 umgreift und diese somit gegen den Rundballen abschirmt. Die Abdeckung 40 ist mehrteilig als Halbschalen ausgebildet und kann in axial verlaufenden Nähten 48 zusammengefügt werden, z.B. mit einem Deckblech 50, und kann somit einfach in radialer Richtung auf die Querstrebe 26 aufgesetzt und montiert werden. Damit die Abdeckung 40 mit möglichst wenig Reibung auf der Querstrebe 26 drehen kann, sind Lager 52 vorgesehen, deren Ausbildung sich gemäß der Figuren 3, 4 und 5 unterscheidet, während deren Funktion die gleiche ist. Gemäß Figur 3 sind Träger 54 vorgesehen, die auf die Querstrebe 26 aufgeschraubt, aufgeklemmt oder aufgeschweißt werden und drei Rollen 56 in den Eckbereichen eines gleichschenkligen Dreiecks drehbar tragen, wobei ein Umfangskreis um die Rollen 56 im Wesentlichen dem Innenumfangskreis der Abdeckung 40 entspricht. Auf die Länge der Querstrebe 26 zwischen den Wangen 42 sind mehrere Lager 52 verteilt, so dass je nach der zu erwartenden Last die Abdeckung 40 sicher abgestützt und abgeschirmt werden kann. Gemäß Figur 4 sind als Gleitlager ausgebildete Lager 52 vorgesehen und wie die Lager 52 nach Figur 3 auf die Querstrebe 26 aufgeklemmt. Um die Abdeckung 40 axial auf der Querstrebe 26 zu sichern, sind axiale Anschläge 70, z.B. Ringe, vorgesehen, die mit der Innenfläche der Abdeckung 40 verbunden sind und an dem Lager 52 außen anliegen. Axiale Anschläge 70 können auch bei anderen Ausführungsformen der Abdeckung 40 in der einen oder anderen Weise vorgesehen werden. Gemäß Figur 5 ist die Querstrebe 26 entweder im Querschnitt rund ausgebildet oder ein Innenrohr ist auf sie aufgeschoben und befestigt. Die Abdeckung 40 gleitet somit auf der außen runden Querstrebe 26 oder auf dem es umgebenden Innenrohr, so dass sich eine größtmögliche Gleitfläche ergibt. All diesen Ausführungen ist gemein, dass eine sich drehende Abdeckung 40 vorgesehen ist, die den relevanten statischen Bereich des Aufbaus 12 - die Querstrebe 26 - abschirmt und sich zwischen der Ballenkammer 20 und der Entladevorrichtung 24 befindet.

Figur 5 zeigt eine Ausführungsform, bei der das Tragelement 34 als ein endloser Riemen oder Band ausgeführt ist und das vorne, d.h. der Querstrebe 26 zugelegen, um die dortige Abdeckung 40 und hinten um eine Umlenkrolle 58 geschlungen ist. Die Umlenkrolle 58 ist in den Endbereichen der beiden Wangen 42 drehbar gelagert, die in diesem Ausführungsbeispiel nicht notwendigerweise nach hinten konvergieren. Anders als es dargestellt ist, könnte der Rahmen 32 auch auf seiner gesamten Länge von gleicher Breite ausgebildet sein. Der Distanzhalter 38 ist in diesem Ausführungsbeispiel als ein liegender U-Bügel ausgebildet, der in sich starr und nicht federnd ausgebildet ist und dessen freie Schenkelenden auf einer Drehachse 60 der Umlenkrolle 58 vertikal schwenkbar gelagert sind. Nahe der Schenkelenden erstrecken sich an dem Distanzhalter 38 nach unten Hebelarme 64, die von Federn 66 beaufschlagt werden, die sich andererseits an den Wangen 42 abstützen.

Die Ausführungsform nach Figur 6 ist hinsichtlich der Wangen 42, der Umlenkrolle 58, und des Distanzhalters 38 gleich ausgeführt wie in Figur 5. Zwar ist auch das Tragelement 34 vorgesehen, dieses erstreckt sich jedoch nun über die Querstrebe 26 hinaus, wird vor dieser um eine weitere Umlenkrolle 62 geführt und nimmt die Querstrebe 26 somit in dem eingeschlossenen Raum zwischen ihren Trumen auf. Mithin übernimmt bei dieser Ausführungsform das Tragelement 34 zugleich die Funktion der Abdeckung 40.

Die Ausbildung der Tragelemente 34 gemäß Figur 5 und/oder 6, d.h. als Transportband, stellt an sich eine von der Abdeckung 40 unabhängige und eigenständige Erfindung dar.

Nach alledem ist ersichtlich, dass ein aus der Ballenkammer 20 austretender Rundballen nicht an einem starren Bereich des Aufbaus 12 zur Anlage kommen kann, sondern sich jeweils auf die Abdeckung 40 absetzt und dabei seine Drehbewegung beibehält. Der Rundballen gelangt auf dem Tragelement 40 drehend nach hinten und unten, rollt über den Distanzhalter 38 auf den Boden und wird dort von dem freien Ende des Distanzhalters 38 an einem Zurückrollen gehindert.

## Patentansprüche

1. Rundballenpresse (10) mit einem Aufbau (12), einer Ballenkammer (20) und einer an diese anschließenden zu einer Abgabestelle eines Rundballens geneigten Entladevorrichtung (24) mit wenigstens einem eine Fortsetzung der Rollbewegung des Rundballens zulassenden Tragelement (34) zwischen der Ballenkammer (20) und einer Bodenfläche, **dadurch gekennzeichnet, dass**:
a) dem Rundballen ausgesetzte Teile insbesondere des Aufbaus (12) zwischen der Ballenkammer (20) und der Entladevorrichtung (34) wenigstens teilweise von einer beweglichen Abdeckung (40) abgeschirmt sind.
b) das Tragelement (34) frei beweglich ist und
c) die Abdeckung (40) und das Tragelement (34) von dem die Ballenkammer verlassenden Rundballen in Bewegung versetzt werden können.

2. Rundballenpresse nach Anspruch 1, **dadurch gekennzeichnet, dass** der Aufbau (12) eine Querstrebe (26), insbesondere eine Achse für Räder (28) aufweist, die von einer als drehbares Rohr ausgebildeten Abdeckung (40) umgeben ist.

3. Rundballenpresse nach Anspruch 2, **dadurch gekennzeichnet, dass** die Abdeckung (40) in der Längsrichtung geteilt ist.

4. Rundballenpresse nach Anspruch 2 oder 3, **dadurch gekennzeichnet, dass** die Abdeckung (40) mit Lagern (52) auf der Querstrebe (26) abgestützt ist.

5. Rundballenpresse nach einem oder mehreren der vorherigen Ansprüche, **dadurch gekennzeichnet, dass** das Tragelement (34) als mehrere hintereinander angeordnete Rollen ausgebildet ist.

6. Rundballenpresse nach einem oder mehreren der Ansprüche 1 bis 4, **dadurch gekennzeichnet, dass** das Tragelement (34) als ein endloser Riemen ausgebildet ist.

7. Rundballenpresse nach einem oder mehreren der Ansprüche 1 bis 4, **dadurch gekennzeichnet, dass** das Tragelement (34) als eine oder mehrere Rampen ausgebildet ist, die Rollkörper oder eine Transportkette, bzw. ein Transportband aufweisen.

8. Rundballenpresse nach Anspruch 6 oder 7, **dadurch gekennzeichnet, dass** das als Riemen, Transportband oder Transportkette ausgebildete Tragelement (34) einenends um die Abdeckung (40) oder um eine Umlenkrolle (62) an dem Aufbau (12) oder der Ballenkammer (20) geschlungen ist.

9. Rundballenpresse nach einem oder mehreren der vorherigen Ansprüche, **dadurch gekennzeichnet, dass** das bzw. die Tragelemente (34) in einem vertikal schwenkbaren Rahmen (32) gehalten werden, der insbesondere in der Abwärtsbewegung an einem Anschlag (36) zur Anlage bringbar ist.

10. Rundballenpresse nach Anspruch 9, **dadurch gekennzeichnet, dass** der Rahmen (32) am Abgabeende mit wenigstens einem insbesondere federnden oder von einer Feder (66) beaufschlagten Distanzhalter (38) versehen ist.

## Claims

1. Round baler (10) having a superstructure (12), a bale chamber (20) and a thereto adjoining unloading apparatus (24) tilted towards a delivery point of a round bale having at least one carrying element (34) between the bale chamber (20) and a ground surface, which carrying element permits a continuation of the rolling motion of a round bale, **characterized in that**:
a) parts exposed to the round bale, in particular of the superstructure (12), are at least partially shielded between the bale chamber (20) and the unloading apparatus (24) by a movable cover (40),
b) the carrying element (34) is freely movable and
c) the cover (40) and the carrying element (34) can be set into motion by the round bale leaving the bale chamber.

2. Round baler according to Claim 1, **characterized in that** the superstructure (12) has a cross-stay (26), in particular an axle for wheels (28), which is surrounded by a cover (40) configured as a rotatable tube.

3. Round baler according to Claim 2, **characterized in that** the cover (40) is divided in the longitudinal direction.

4. Round baler according to Claim 2 or 3, **characterized in that** the cover (40) is supported with bearings (52) on the cross-stay (26).

5. Round baler according to one or more of the previous claims, **characterized in that** the carrying element (34) is configured as a plurality of rollers disposed one behind the other.

6. Round baler according to one or more of Claims 1 to 4, **characterized in that** the carrying element (34) is configured as an endless belt.

7. Round baler according to one or more of Claims 1 to 4, **characterized in that** the carrying element (34) is configured as one or more ramps, which have rolling bodies or a conveyor chain or a conveyor belt.

8. Round baler according to Claim 6 or 7, **characterized in that** the carrying element (34) configured as a belt, conveyor belt or conveyor chain is wrapped at one end around the cover (40) or around a return roller (62) on the superstructure (12) or the bale chamber (20).

9. Round baler according to one or more of the previous claims, **characterized in that** the carrying element(s) (34) is/are held in a vertically pivotable frame (32), which, in particularly in the downward motion, can be brought to bear against a stop (36).

10. Round baler according to Claim 9, **characterized in that** the frame (32) is provided at the delivery end with at least one spacer (38), which, in particular, is resilient or is acted on by a spring (66).

## Revendications

1. Presse à ballots ronds (10) avec une superstructure (12), une chambre à ballots (20) et un dispositif de déchargement (24) raccordé à celle-ci et incliné vers un point de déchargement d'un ballot rond avec au moins un élément de support (34) permettant une poursuite du mouvement de roulement du ballot rond entre la chambre à ballots (20) et une surface de sol, **caractérisée en ce que**
a) des parties notamment de la superstructure (12) exposées au ballot rond entre la chambre à ballots (20) et le dispositif de déchargement (34) sont protégées au moins partiellement par un capot mobile (40),
b) l'élément de support (34) est librement mobile, et
c) le capot (40) et l'élément de support (34) peuvent être déplacés par le ballot rond en mouvement quittant la chambre à ballots.

2. Presse à ballots ronds selon la revendication 1, **caractérisée en ce que** la superstructure (12) présente une entretoise transversale (26), en particulier un axe pour des roues (28), qui est entourée par un capot (40) réalisé sous la forme d'un tube rotatif.

3. Presse à ballots ronds selon la revendication 2, **caractérisée en ce que** le capot (40) est divisé dans la direction longitudinale.

4. Presse à ballots ronds selon la revendication 2 ou 3, **caractérisée en ce que** le capot (40) est appuyé sur l'entretoise transversale (26) au moyen de paliers (52).

5. Presse à ballots ronds selon une ou plusieurs des revendications précédentes, **caractérisée en ce que** l'élément de support (34) est réalisé sous la forme de plusieurs rouleaux disposés les uns derrière les autres.

6. Presse à ballots ronds selon une ou plusieurs des revendications 1 à 4, **caractérisée en ce que** l'élément de support (34) est réalisé sous la forme d'une courroie sans fin.

7. Presse à ballots ronds selon une ou plusieurs des revendications 1 à 4, **caractérisée en ce que** l'élément de support (34) est réalisé sous la forme d'une ou de plusieurs rampes, qui présentent des corps de roulement ou une chaîne de transport, ou une bande transporteuse.

8. Presse à ballots ronds selon la revendication 6 ou 7, **caractérisée en ce que** l'élément de support (34) réalisé sous la forme d'une courroie, d'une bande transporteuse ou d'une chaîne de transport est enroulé à une extrémité autour du capot (40) ou d'un rouleau de déviation (62) sur la superstructure (12) ou la chambre à ballots (20).

9. Presse à ballots ronds selon une ou plusieurs des revendications précédentes, **caractérisée en ce que** le ou les élément(s) de support (34) est/sont maintenu(s) dans un cadre pivotant verticalement (32), qui peut venir s'appliquer contre une butée (36) en particulier lors du mouvement vers le bas.

10. Presse à ballots ronds selon la revendication 9, **caractérisée en ce que** le cadre (32) est pourvu, à l'extrémité de déchargement, d'au moins un élément d'écartement (38) en particulier élastique ou soumis à l'action d'un ressort (66).
